# FASCICULE DE BREVET EUROPEEN

(11) **EP 1 060 555 B1**
(45) Date de publication et mention de la délivrance du brevet: **30.06.2004**
(21) Numéro de dépôt: 99973187.0
(22) Date de dépôt: 30.11.1999
(51) Int. Cl.: H02K 1/22

(54) **ROTOR D'ALTERNATEUR DE VEHICULE A AIMANTS PERMANENTS INTERCALAIRES**
ROTOR MIT ZWISCHENLIEGENDEN DAUERMAGNETEN FÜR WECHSELSTROMGENERATOR FÜR KRAFTFAHRZEUGE
MOTOR VEHICLE ALTERNATOR ROTOR WITH INTERPOSED PERMANENT MAGNETS

(30) Priorité: 30.11.1998 FR 9815033
(43) Date de publication de la demande: 20.12.2000
(73) Titulaire: VALEO EQUIPEMENTS ELECTRIQUES MOTEUR, 94000 Créteil (FR)
(72) Inventeur: ARMIROLI, Paul, F-94440 Marolles-en-Brie (FR); BADEY, Jean-Philippe, F-62630 Etaples-sur-mer (FR)
(74) Mandataire: Le Forestier, Eric
(86) Numéro de dépôt international: PCT/FR1999/002959
(87) Numéro de publication internationale: WO 2000/033439

(56) Documents cités:
- DE-A- 19 632 219
- DE-A- 19 802 785
- DE-A- 19 802 786
- DE-A- 19 806 667
- US-A- 5 132 581
- US-A- 5 793 143
- US-A- 5 969 459
- PATENT ABSTRACTS OF JAPAN vol. 018, no. 332 (E-1567), 23 juin 1994 (1994-06-23) -& JP 06 078479 A (NIPPONDENSO CO LTD), 18 mars 1994 (1994-03-18)

## Description

La présente invention a trait d'une façon générale aux machines tournantes telles que les alternateurs pour véhicules automobiles du type comportant un stator et un rotor.

On connaît un tel rotor comprenant un arbre, deux plateaux enfilés sur l'arbre et comprenant des cornes imbriquées, et des aimants permanents disposés dans les espaces entre les cornes. Les aimants sont maintenus en place par exemple au moyen d'une pièce de maintien monobloc en résine recevant les aimants dans des logements et interposée entre les plateaux et entre les cornes. Ce dispositif a pour inconvénient qu'il requiert de monter les différents éléments du rotor dans un certain ordre, à savoir loger les aimants sur la pièce de maintien et rapporter les plateaux de part et d'autre de celle-ci. Or, cet ordre peut être contraignant par rapport à l'organisation de la chaîne d'assemblage. De plus, une grande partie de la pièce de maintien s'étend entre les aimants et les cornes, ainsi qu'à l'intérieur du rotor. Il s'ensuit qu'on doit réduire le volume des aimants et/ou d'autres pièces du rotor, ce qui amoindrit les performances de l'alternateur.

Le document JP-A-10 201 149 divulgue un alternateur conforme au préambule de la revendication 1.

Un but de l'invention est de fournir un rotor d'un type différent, permettant notamment un autre ordre de montage, et préservant le volume interne du rotor notamment disponible pour les aimants.

En vue de la réalisation de ce but, on prévoit selon l'invention un alternateur de véhicule conforme à la revendication 1.

Ainsi, les organes de maintien sont aptes à être rapportés sur le rotor suivant une direction axiale du rotor, après que les plateaux ont été montés. De plus, la portion de chaque organe de maintien qui s'étend en regard de la face externe d'extrémité axiale du plateau constitue autant de matière qui ne s'étend pas à l'intérieur du rotor. Le volume des autres pièces du rotor est donc préservé d'autant.

De plus, grâce à ce support externe, on préserve davantage le volume interne du rotor que par un maintien interne des aimants.

Enfin, la patte tient compte des différences d'inclinaison des deux aimants autour de l'axe du rotor sans compliquer la fabrication de la patte.

Avantageusement, chaque patte présente une encoche à un bord d'extrémité de la patte.

Cette encoche permet de loger la pointe de la corne située en regard de la patte et donc de prolonger la patte de part et d'autre de la corne.

Avantageusement, les organes de maintien comportent chacun un flasque s'étendant en regard de l'un des plateaux.

Avantageusement, chaque organe de maintien présente des ouvertures communiquant avec des espaces situés sous les aimants.

On assure ainsi un passage d'air sous les aimants pour le refroidissement de l'intérieur du rotor.

D'autres modes de réalisation sont énoncés aux revendications 5 à 12.

Les caractéristiques et avantages de l'invention apparaitront encore dans la description suivante d'un mode préféré de réalisation donné à titre d'exemple non limitatif. Aux dessins annexés :
- la figure 1 est une vue en élévation d'un rotor d'un alternateur selon un mode de réalisation de l'invention ;
- la figure 2 est une vue partiellement en élévation et partiellement en coupe axiale du rotor de la figure 1 ; et
- la figure 3 est une vue d'extrémité axiale du rotor de la figure 1 ;

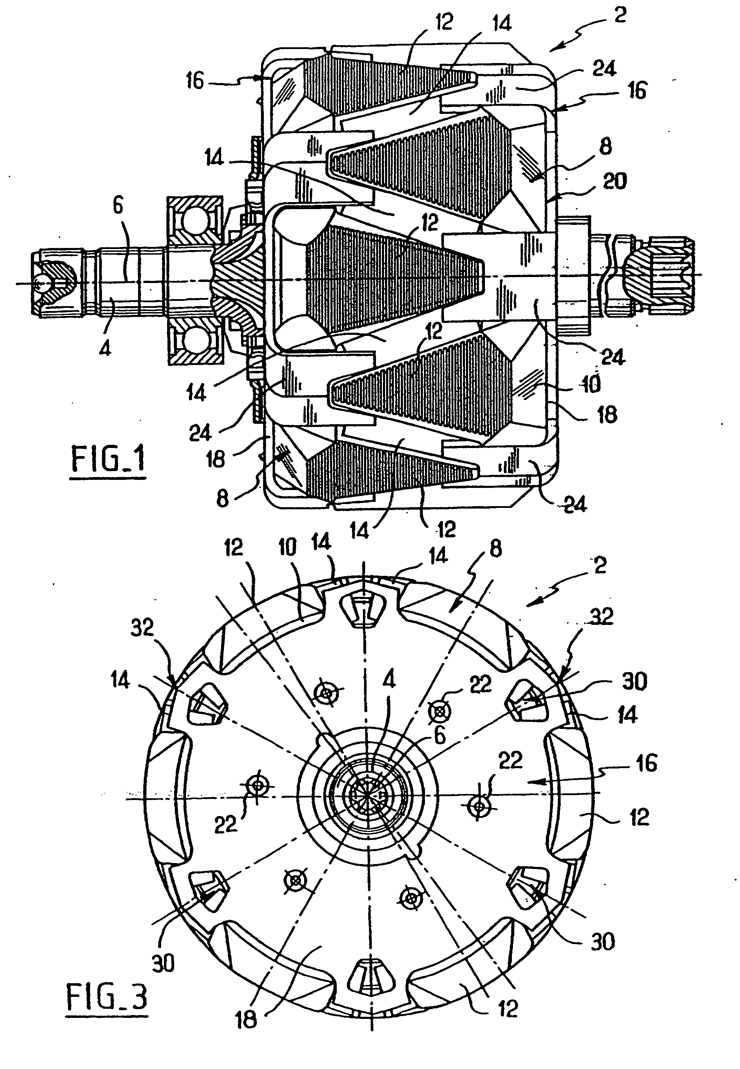

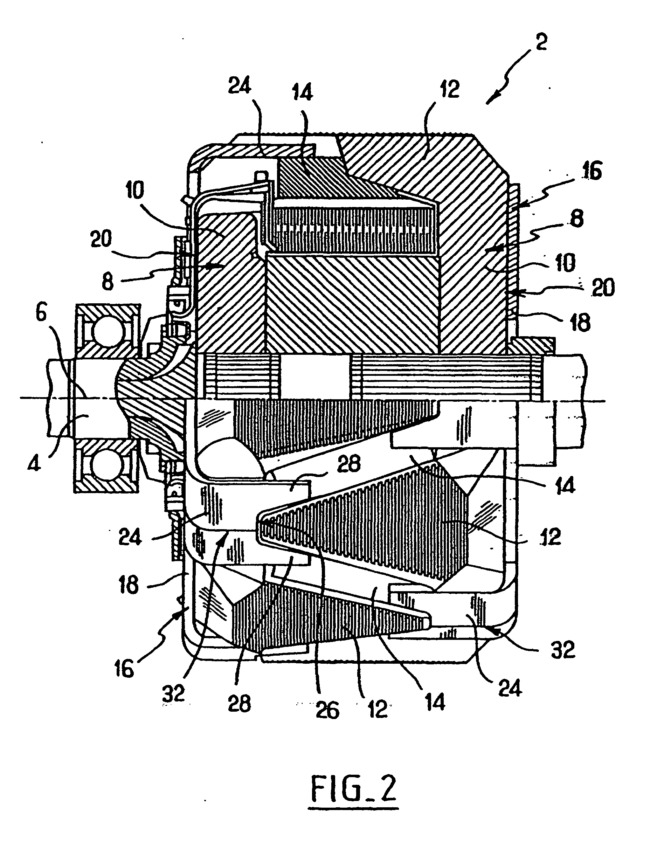

En référence aux figures 1, 2 et 3, le rotor 2 de l'alternateur pour véhicule automobile comporte un arbre 4 d'axe 6 et deux plateaux polaires 8 comprenant chacun une paroi 10 en forme de disque d'axe 6 et des cornes ou griffes polaires 12. Chaque corne 12 a une forme générale plane triangulaire. Les cornes 12 de chaque plateau 8 s'étendent avec leur pointe en direction de l'autre plateau, en étant imbriquées avec les cornes de l'autre plateau et en ménageant des intervalles entre les cornes adjacentes. Le rotor comporte des aimants permanents 14 en forme générale de parallélépipède, logés dans les intervalles entre les cornes adjacentes 12 et collés à celles-ci.

Le rotor 2 comporte deux organes de maintien 16 comprenant chacun un flasque 18 en forme de disque s'étendant parallèlement et coaxialement aux plateaux 8, contre une face externe d'extrémité axiale 20 de la paroi 10. Le flasque 18 est fixé à la paroi 10 du plateau par soudage, vissage ou clipsage, en plusieurs points 22 comme le montre la figure 3.

Chaque organe de maintien 16 comporte des pattes 24 constituant avec le flasque 18 une pièce monobloc. Les pattes 24 ont chacune une forme générale rectangulaire parallèle à l'axe 6 et à la paroi externe circonférentielle des cornes 12 et des aimants 14. Sur chaque organe de maintien 16, les pattes 24 s'étendent à partir du flasque 18 en direction de l'autre organe de maintien. De plus, elles s'étendent en direction de la pointe des cornes polaires 12 associées au plateau 8 auquel l'autre organe de maintien est fixé. A cet effet, suivant une caractéristique chaque patte 24 a un bord d'extrémité libre rectiligne et orthogonal à l'axe 6, présentant une encoche 26 en forme générale de « U » à branches divergentes, adaptée à recevoir la pointe de la corne 12 vers laquelle la patte 24 est dirigée. Cette encoche 26 définit sur la patte deux languettes 28 qui s'étendent de part et d'autre de la corne 12 en regard et en contact de la face externe circonférentielle des deux aimants 14 s'étendant contre la corne précitée. Chaque aimant 14 est maintenu radialement par une languette 28 d'une patte 24 à une extrémité axiale et par une languette 28 d'une autre patte à une autre extrémité axiale. Chaque patte 24 présente ainsi selon l'invention un pli longitudinal 32 parallèle à l'axe 6 et divisant la patte en deux parties planes symétriques l'une de l'autre par rapport au pli et légèrement inclinées l'une par rapport à l'autre pour suivre l'inclinaison correspondante des faces externes circonférentielles des aimants 14 contre lesquels la patte vient en appui.

Pour assembler le rotor, on monte les deux plateaux 8 sur l'arbre 4, on rapporte l'un des organes de maintien 16 axialement contre l'un des plateaux 8, on glisse les aimants 14 entre les cornes 12 à partir de l'emplacement de l'organe de maintien restant à installer, puis on rapporte cet organe de maintien 16 axialement sur l'ensemble.

Chaque flasque 18 présente des ouïes formant des ouvertures axiales 30 à la naissance de chaque patte 24. Cette position des ouïes assure un passage d'air de l'un à l'autre des flasques sous les aimants 14 dans le rotor.

Les aimants permanents interpolaires 14 pourront être en ferrite ou en terre rare. Selon les applications, les deux organes de maintien 16 pourront avoir des formes et/ou des dimensions différentes l'un de l'autre. Les aimants permanents 14 pourront être disposés en appui radial vers l'intérieur sur un épaulement des plateaux 8.

## Revendications

1. Alternateur de véhicule comprenant un rotor (2) comportant un arbre (4), deux plateaux (8) comprenant des cornes imbriquées (12), des aimants (14) s'étendant entre les cornes, et des organes (16 ; 40, 42) de maintien des aimants, qui sétendent en regard d'une face externe d'extrémité axiale (20) des plateaux (8), et en regard d'une face externe circonférentielle des aimants (14),
**caractérisé en ce que** les organes de maintien (16) comprennent des pattes (24) s'étendant chacune en regard d'une face externe circonférentielle de deux aimants (14), chaque patte (24) comprenant deux parties planes séparées par un pli (32) parallèle à un axe (6) du rotor.

2. Alternateur selon la revendication 1, **caractérisé en ce que** chaque patte (24) présente une encoche (26) à un bord d'extrémité de la patte.

3. Alternateur selon l'une quelconque des revendications 1 à 2, **caractérisé en ce que** les organes de maintien (16) comportent chacun un flasque (18) s'étendant en regard de l'un des plateaux (8).

4. Alternateur selon l'une quelconque des revendications 1 à 3, **caractérisé en ce que** chaque organe de maintien (16, 18) présente des ouvertures (30) communiquant avec des espaces situés sous les aimants (14).

5. Alternateur selon l'une quelconque des revendications 1 à 4, **caractérisé en ce que** les organes de maintien (16) sont directement fixés aux plateaux (8).

6. Alternateur selon l'une quelconque des revendications 1 à 5, **caractérisé en ce que** les organes de maintien (40, 42) sont fixés à une face externe (20) d'extrémité axiale des plateaux (8).

7. Alternateur selon l'une quelconque des revendications 1 à 6, **caractérisé en ce que** les organes de maintien (40, 42) sont soudés aux plateaux (8).

8. Alternateur selon l'une quelconque des revendications 1 à 7, **caractérisé en ce que** chaque organe de maintien (40, 42) s'étend continûment de l'une à l'autre des faces externes (20) d'extrémité axiale des plateaux (8) respectifs.

9. Alternateur selon l'une quelconque des revendications 1 à 8, **caractérisé en ce que** les organes de maintien (40, 42) sont réalisés en tôle pliée.

10. Alternateur selon l'une quelconque des revendications 1 à 9, **caractérisé en ce que** les aimants permanents (14) sont logés dans des intervalles entre les cornes adjacentes en étant collés à celles-ci.

11. Alternateur selon la revendication 10, **caractérisé en ce que** les aimants permanents ont une forme générale de parallélépipède.

12. Alternateur selon l'une quelconque des revendications 1 à 11, **caractérisé en ce que** les aimants permanents (14) sont disposés en appui radial vers l'intérieur sur un épaulement des plateaux.

## Patentansprüche

1. Wechselstromgenerator für Kraftfahrzeuge mit einem Rotor (2) mit einer Welle (4), zwei Platten (8) mit ineinandergreifenden Polhörnern (2), Magneten (14), die sich zwischen den Polhörnern erstrecken und Halteorganen (16; 40; 42) zum Halten der Magneten, die sich gegenüber einer axial endseitigen Außenfläche (20) der Platten (8) und gegenüber einer umfangsmäßigen Außenfläche der Magneten (14) erstrecken, **dadurch gekennzeichnet, daß** die Halteorgane (16) Ansätze (24) umfassen, die sich jeweils gegenüber einer umfangsmäßigen Außenfläche von zwei Magneten (16) erstrecken, wobei jeder Ansatz (24) zwei ebene Teile umfaßt, die durch eine Biegung (32) parallel zu einer Achse (6) des Rotors getrennt sind.

2. Wechselstromgenerator nach Anspruch 1, **dadurch gekennzeichnet, daß** jeder Ansatz (24) eine Ausnehmung (26) an einem Abschlußrand des Ansatzes aufweist.

3. Wechselstromgenerator nach einem der Ansprüche 1 bis 2, **dadurch gekennzeichnet, daß** die Halteorgane (16) jeweils einen Flansch (18) umfassen, der sich gegenüber einer der Platten (8) erstreckt.

4. Wechselstromgenerator nach einem der Ansprüche 1 bis 3, **dadurch gekennzeichnet, daß** jedes Halteorgan (16, 18) Öffnungen (30) aufweist, die mit unter den Magneten (14) befindlichen Zwischenräumen in Verbindung stehen.

5. Wechselstromgenerator nach einem der Ansprüche 1 bis 4, **dadurch gekennzeichnet, daß** die Halteorgane (16) direkt an den Platten (8) befestigt sind.

6. Wechselstromgenerator nach einem der Ansprüche 1 bis 5, **dadurch gekennzeichnet, daß** die Halteorgane (40, 42) an einer axial endseitigen Außenfläche (20) der Platten (8) befestigt sind.

7. Wechselstromgenerator nach einem der Ansprüche 1 bis 6, **dadurch gekennzeichnet daß** die Halteorgane (40, 42) an den Platten (8) angeschweißt sind.

8. Wechselstromgenerator nach einem der Ansprüche 1 bis 7, **dadurch gekennzeichnet, daß** sich jedes Halteorgan (40, 42) durchgehend von einer zur anderen der axial endseitigen Außenflächen (20) der jeweiligen Platten (8) erstreckt.

9. Wechselstromgenérator nach einem der Ansprüche 1 bis 8, **dadurch gekennzeichnet, daß** die Halteorgane (40, 42) aus gebogenem Blech ausgeführt sind.

10. Wechselstromgenerator nach einem der Ansprüche 1 bis 9, **dadurch gekennzeichnet, daß** die Dauermagneten (14) in Zwischenräumen zwischen den benachbarten Polhörnern gelagert sind, wobei sie an diesen verklebt sind.

11. Wechselstromgenerator nach Anspruch 10, **dadurch gekennzeichnet, daß** die Dauermagneten eine allgemeine Quaderform aufweisen.

12. Wechselstromgenerator nach einem der Ansprüche 1 bis 11, **dadurch gekennzeichnet, daß** die Dauermagneten (14) in radialer Anlage nach innen an einer Schulter der Platten angeordnet sind.

## Claims

1. Vehicle alternator comprising a rotor (2) including a shaft (4), two plates (8) comprising interleaved pole horns (12), magnets (14) lying between the pole horns, and magnet holding members (16; 40, 42), which face an outside axial end face (20) of the plates (8) and face an outside circumferential face of the magnets (14), **characterized in that** the holding members (16) comprise lugs (24) each facing an outside circumferential face of two magnets (14), each lug (24) comprising two plane parts separated by a bend (32) parallel to an axis (6) of the rotor.

2. Alternator according to Claim 1, **characterized in that** each lug (24) has a notch (26) at one end edge.

3. Alternator according to either of Claims 1 and 2, **characterized in that** the holding members (16) each include a flange (18) facing one of the plates (8).

4. Alternator according to any one of Claims 1 to 3, **characterized in that** each holding member (16, 18) has openings (30) communicating with spaces under the magnets (14).

5. Alternator according to any one of Claims 1 to 4, **characterized in that** the holding members (16) are fixed directly to the plates (8).

6. Alternator according to any one of Claims 1 to 5, **characterized in that** the holding members (40, 42) are fixed to an outside axial end face (20) of the plates (8).

7. Alternator according to any one of Claims 1 to 6, **characterized in that** the holding members (40, 42) are welded to the plates (8).

8. Alternator according to any one of Claims 1 to 7, **characterized in that** each holding member (40, 42) extends continuously from one outside axial end face of the respective plates (8) to the other.

9. Alternator according to any one of Claims 1 to 8, **characterized in that** the holding members (40, 42) are made of bent plate.

10. Alternator according to any one of Claims 1 to 9, **characterized in that** the permanent magnets (14) are housed in gaps between the adjacent pole horns, being glued to the latter.

11. Alternator according to Claim 10, **characterized in that** the permanent magnets have a parallelepipedal general shape.

12. Alternator according to any one of Claims 1 to 11, **characterized in that** the permanent magnets (14) are arranged bearing radially inwards on a shoulder of the plates.
